# EUROPEAN PATENT SPECIFICATION

(11) **EP 2 686 961 B1**
(45) Date of publication and mention of the grant of the patent: **15.01.2020**
(21) Application number: 12761002.0
(22) Date of filing: 16.03.2012
(51) Int. Cl.: H03M 1/66

(54) **SEGMENTED CHIRPED-PULSE FOURIER TRANSFORM SPECTROSCOPY**
SEGMENTIERTE CHIRPED-PULSE-FOURIERTRANSFORMATIONSSPEKTROSKOPIE
SPECTROSCOPIE À TRANSFORMATION DE FOURIER UTILISANT DES IMPULSIONS COMPRIMÉES SEGMENTÉES

(30) Priority: 18.03.2011 US 201161454223 P
(43) Date of publication of application: 22.01.2014
(73) Proprietor: University of Virginia Patent Foundation, Charlottesville, VA 22902 (US)
(72) Inventor: PATE, Brooks H., Charlottesville, Virginia 22903 (US); NEILL, Justin L., Saline, MI 48176 (US)
(74) Representative: Pfenning, Meinig & Partner mbB
(86) International application number: PCT/US2012/029430
(87) International publication number: WO 2012/129089

(56) References cited:
- US-A1- 2009 161 092
- US-A1- 2010 046 003
- US-A1- 2010 290 025
- BROWN GORDON ET AL: "A broadband Fourier transform microwave spectrometer based on chirped pulse excitation", REVIEW OF SCIENTIFIC INSTRUMENTS, AIP, MELVILLE, NY, US, vol. 79, no. 5, 9 May 2008 (2008-05-09), pages 53103-53103, XP012115378, ISSN: 0034-6748, DOI: 10.1063/1.2919120
- JUSTIN L. NEILL ET AL: "Segmented chirped-pulse Fourier transform submillimeter spectroscopy for broadband gas analysis", OPTICS EXPRESS, vol. 21, no. 17, 15 August 2013 (2013-08-15), page 19743, XP055133294, DOI: 10.1364/OE.21.019743

## Description

### CLAIM OF PRIORITY

Benefit of priority is hereby claimed to U.S. Provisional Patent Application Serial Number 61/454,223, titled "SEGMENTED CHIRPED-PULSE FOURIER TRANSFORM SPECTROSCOPY AT MILLIMETER-AND SUBMILLIMETER-WAVE FREQUENCIES AND RELATED METHOD THEREOF," filed on March 18, 2011 (Attorney Docket No. PATE-SEGMENT (01829-01).

### STATEMENT REGARDING FEDERALLY-SPONSORED RESEARCH OR DEVELOPMENT

This invention was made with government support under Grant No. CHE-0847919 awarded by the National Science Foundation (NSF). The government has certain rights in the invention.

### BACKGROUND

Spectroscopy, such as rotational spectroscopy, is a powerful structural tool in physical chemistry. For example, the relationship between a molecular structure and its rotational transition frequencies can be used for structure determination of gas phase samples. Other effects in the rotational motion of molecules, such as centrifugal distortion, hyperfine spectral structure from quadrupolar nuclei, or frequency shifts caused by tunneling motion, can be used to provide further characterization of the molecular structure and low frequency vibrational motions.

The millimeter (mm) wave or terahertz (THz) frequency region is a particularly useful region for chemical detection and characterization. For room temperature samples, this is the region where pure rotational spectra are most intense. All molecules with a permanent dipole moment have a pure rotational spectrum. Such a spectrum includes a large number of sharp transitions that can serve as a "fingerprint" of a molecular identity. For example, such transitions can be about 1 megahertz (MHz) in width at about 300 gigahertz (GHz) in a low-pressure gas cell. In one approach, the transition frequencies can be related back to the molecular identity, such as through fitting with a molecular Hamiltonian, which can explain measured transition frequencies and relative intensities in terms of calculable physical parameters. From the intensities of the transitions observed by millimeter- and sub-millimeter-wave spectroscopy, absolute molecular concentrations can be derived with high accuracy and selectivity.

Designs for a broadband chirped pulse Fourier transform microwave (CP-FTMW) spectrometer are presented in BROWN GORDON ET AL: "A broadband Fourier transform microwave spectrometer based on chirped pulse excitation", REVIEW OF SCIENTIFIC INSTRUMENTS, AIP, MELVILLE, NY, US, vol. 79, no. 5, 9 May 2008, p. 53103. The spectrometer is capable of measuring the 7-18 GHz region of a rotational spectrum in a single data acquisition. One design uses a 4.2 Gsamples/s arbitrary waveform generator (AWG) to produce a 1 µs duration chirped pulse with a linear frequency sweep of 1.375 GHz. This pulse is sent through a microwave circuit to multiply the bandwidth of the pulse by a factor of 8 and upconvert it to the 7.5-18.5 GHz range. The chirped pulse is amplified by a traveling wave tube amplifier and broadcast inside the spectrometer by using a double ridge standard gain horn antenna. The broadband molecular free induction decay (FID) is received by a second horn antenna, downconverted, and digitized by a 40 Gsamples/s (12 GHz hardware bandwidth) digital oscilloscope. The second design uses a simplified pulse generation and FID detection scheme, employing current state-of-the-art high-speed digital electronics. In this spectrometer, a chirped pulse with 12 GHz of bandwidth is directly generated by using a 20 Gsamples/s AWG and upconverted in a single step with an ultrabroadband mixer. The amplified molecular emission is directly detected by using a 50 Gsamples/s digital oscilloscope with 18 GHz bandwidth. In both designs, fast Fourier transform of the FID produces the frequency domain rotational spectrum in the 7-18 GHz range.

### OVERVIEW

In one approach, techniques for millimeter- wave spectroscopy involve measuring molecular transitions based on their absorption of radiation, using a synthesizer in the microwave frequency region, coupled to one or more frequency multipliers, as the radiation source. However, the slow scanning and switching speeds of such synthesizers preclude rapid detection of large bandwidths. For example, monitoring of complex chemical mixtures at desired video refresh rates is not possible using these techniques.

The present inventors have recognized, among other things, that a highspeed Digital-to-Analog converter (DAC), such as a high-speed Arbitrary Waveform Generator (AWG), can provide a frequency-agile source of energy including microwave frequencies, and can open new opportunities for the fast detection of millimeter wave spectra when included in a spectroscopy system instead of or in addition to generally-available synthesizers.

In an example, a DAC can create a high-bandwidth linear frequency sweep (e.g., a chirped pulse), which can be amplified such as to induce polarizations in a molecular sample at the frequencies of transitions within the bandwidth of the pulse. The sample then continues to emit radiation at the frequencies of the transitions, and such free induction decay (FID) emission signals can be digitized and Fourier transformed to yield a molecular spectrum. Such Chirped-Pulse Fourier Transform (CP-FT) techniques generally provide high sensitivity, dynamic range, and frequency accuracy in the detection of broadband molecular spectra. Due to the fast acquisition speed, short-lived species generated in sample cells, such as ions and radicals, can be characterized using CP-FT techniques. However, generally-available digitizer bandwidths are limited. Accordingly, the present inventors have also recognized that to collect higher-bandwidth spectra (e.g., spectra having a total bandwidth wider than an available digitizer bandwidth), a technique to reduce the required digitizer bandwidth is needed.

The present inventors have recognized, among other things, that a "segmented" CP-FT technique can be used, such as using the DAC to generate a chirped-pulse waveform, and using the DAC to generate one or more Local Oscillator (LO) frequencies. Such a segmented CP-FT method can reduce the bandwidth demanded for the digitizer by a "divide and conquer" approach that segments the total measurement bandwidth into a series of segments. For example, a bandwidth of a frequency multiplied chirped-pulse waveform can be specified at least in part based on an available digitizer bandwidth, and each segment can include a chirped pulse specified to excite the sample in such a manner that resulting emissions can be captured within the available digitizer bandwidth. A total bandwidth of interest to be measured can be wider than the digitizer bandwidth, and can be obtained via generating a series of respective chirped pulses and LO frequencies corresponding to each segment, obtaining emissions for each segment, then assembling an ensemble of respective estimated spectra corresponding to each segment to provide coverage of the total bandwidth of interest.

Using a DAC-based source, these segments can be measured in rapid succession to cover large frequency ranges. For example, received emissions can be downconverted using a heterodyne detection technique. Such heterodyne detection generally uses a high agility, phase-reproducible local oscillator (LO) source and this source can also be DAC-based, and is thus very rapidly tunable.

The invention is defined by the claims. According to the invention, an emission is obtained from a sample in response to excitation using a specified range of excitation frequencies. Such excitation includes generating a specified chirped waveform and a specified downconversion local oscillator (LO) frequency using a digital-to-analog converter (DAC), upconverting the chirped waveform via mixing the chirped waveform with a specified upconversion LO frequency, frequency multiplying the upconverted chirped waveform to provide a chirped excitation signal for exciting the sample, receiving an emission from sample, the emission elicited at least in part by the chirped excitation signal, and downconverting the received emission via mixing the received emission with a signal based on the specified downconversion LO signal to provide a downconverted emission signal within the bandwidth of an analog-to-digital converter (ADC). The specified chirped waveform includes a first chirped waveform during a first duration, and a second chirped waveform during a second duration.

The spectroscopy techniques and apparatus described herein can be generally applicable to both the microwave frequency region, and much higher frequencies (e.g., mm- or sub-millimeter wavelengths - which include frequencies in the terahertz (THz) region of the electromagnetic spectrum). For example, generally-available frequency multipliers can provide signals into the mm-region (or even shorter wavelengths), and have made possible the generation of phase-stable radiation with high frequency precision for high-sensitivity spectroscopy.

This overview is intended to provide an overview of subject matter of the present patent application. It is not intended to provide an exclusive or exhaustive explanation of the invention. The detailed description is included to provide further information about the present patent application.

### BRIEF DESCRIPTION OF THE DRAWINGS

FIG. 1 illustrates generally an example of a system for generating a chirped-pulse excitation signal, and for obtaining emission from a sample in response to such excitation.
FIG. 2A illustrates generally an illustrative example of a mm-wave spectrometer system, such as including a sub-harmonic mixer having two input ports.
FIG. 2B illustrates generally an illustrative example of a mm-wave spectrometer system, such as including a fundamental-mode mixer having two input ports.
FIG. 3A illustrates generally an illustrative example of a spectrogram representation of the DAC channel outputs, such as corresponding to a dual-channel example, and FIG. 3B illustrates generally a detailed view of a portion of FIG. 3A.
FIG. 4A illustrates generally an illustrative example of a time-domain waveform including a chirped pulse followed by a single-frequency LO pulse, and FIG. 4B illustrates generally a spectrogram of the time-domain waveform of FIG. 4A.
FIG. 5 illustrates generally an illustrative example of a comparison between a direct-absorption spectroscopy technique using a broadband chirped-pulse frequency comb (CP-FC) spectrometer, and a segmented CP-FT approach.
FIGS. 6A through 6B illustrate generally an illustrative example of an experimentally-obtained spectrum for vinyl cyanide from 260 GHz to 290 GHz, using a segmented CP-FT approach, as compared to a simulated spectrum.
FIGS. 7A through 7B illustrate generally an illustrative example of an experimentally-obtained spectrum for methanol from 0.790 THz to 0.850 THz, using a segmented CP-FT approach, as compared to a simulated spectrum.
FIG. 8 illustrates generally illustrative examples of experimentally-obtained spectra using a segmented CP-FT approach, and including a double-resonance measurement technique.
FIG. 9 illustrates generally a technique, such as a method for obtaining an emission from a sample in response to excitation using a specified range of excitation frequencies.

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

### DETAILED DESCRIPTION

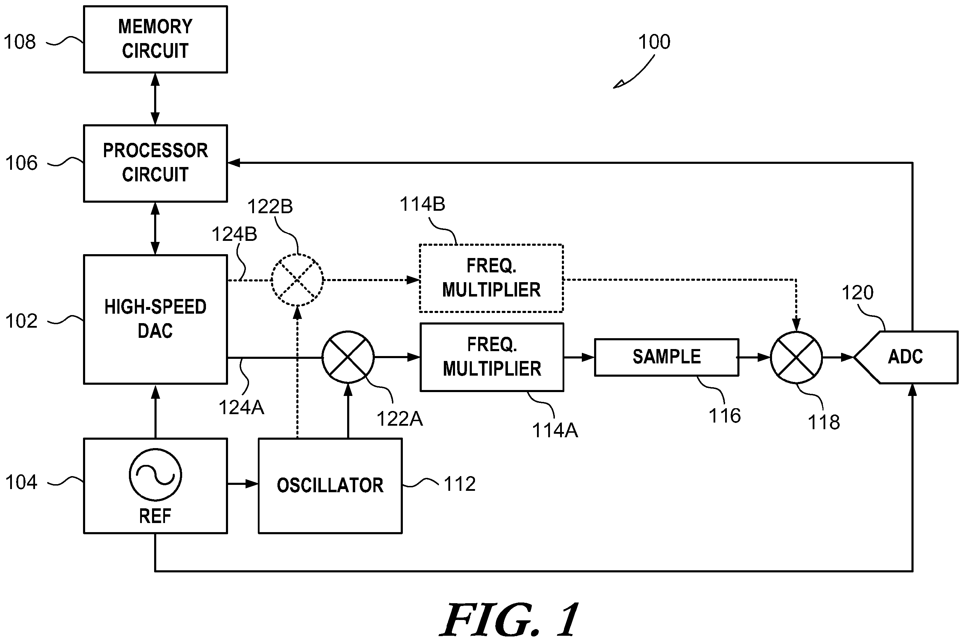

FIG. 1 illustrates generally an example of a system **100**, such as can be used for generating a chirped-pulse excitation signal, or for obtaining emission from a sample in response to such excitation. In an example, the system **100** can include at least one processor circuit **106**, such as coupled to a memory circuit **108** (or one or more other storage circuits or devices). The processor circuit **106** can be coupled to a high-speed DAC **102**, such as include one or more output channels, such as a first channel **124A**, or a second channel **124B**.

In an example, the system **100** can include a frequency reference **104**, such as configured to provide a stabilized reference frequency for use by one or more other portions of the system **100**. In an example, the system **100** can include a first mixer **122A**, such as configured upconvert a chirped waveform using a specified upconversion LO frequency. The chirped waveform can be provided by the high-speed DAC **102**. The upconversion LO frequency can be provided by an oscillator **112**. In an example, the first mixer **122A** can be configured to provide an upconverted chirped waveform to a frequency multiplier **114A**, and the frequency multiplier **114A** can output a chirped excitation signal within a specified frequency range for use in exciting a sample **116**.

In an example, the system **100** can include a second mixer **118**, such as configured to receive an emission from the sample **116**, and to downconvert the received emission using a signal based on a specified downconversion LO signal. The downconverted emission signal can be provided to input of an ADC **120**, within the available bandwidth of the ADC **120**. The processor circuit **106** can be configured to estimate a spectrum of the emission signal using information obtained via the ADC **120**.

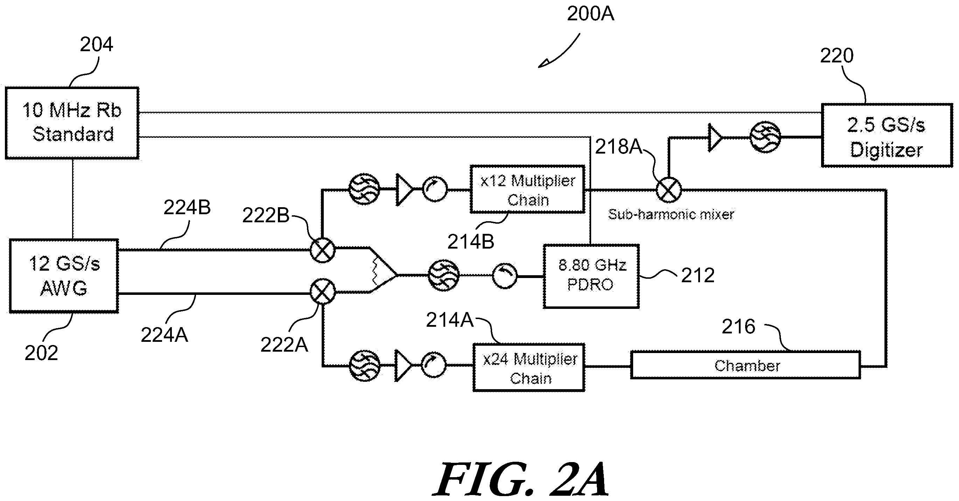

The specified downconversion LO signal can be provided by the high-speed DAC **102**, using one or more of the first or second channels **124A** or **124B.** The specified downconversion LO signal can be upconverted using the first mixer **122A** or a third mixer **122B**. The upconverted LO signal can then be frequency multiplied using the first frequency multiplier **114A** or a second frequency multiplier **114B**, such as to provide the signal based on the specified downconversion LO signal for use by the second mixer **118**. In this manner, the high-speed DAC **102** can generate a rapidly-tunable LO signal that can then be routed through the mixer and multiplier chain for use in downconverting the received emissions from the sample **116** using the second mixer **118**. In one approach, the mixer and multiplier chain can be independent of the chain used for the chirped-pulse excitation signal, such as shown by the dotted lines in FIG. 1, and in the illustrative example of FIG. 2A.

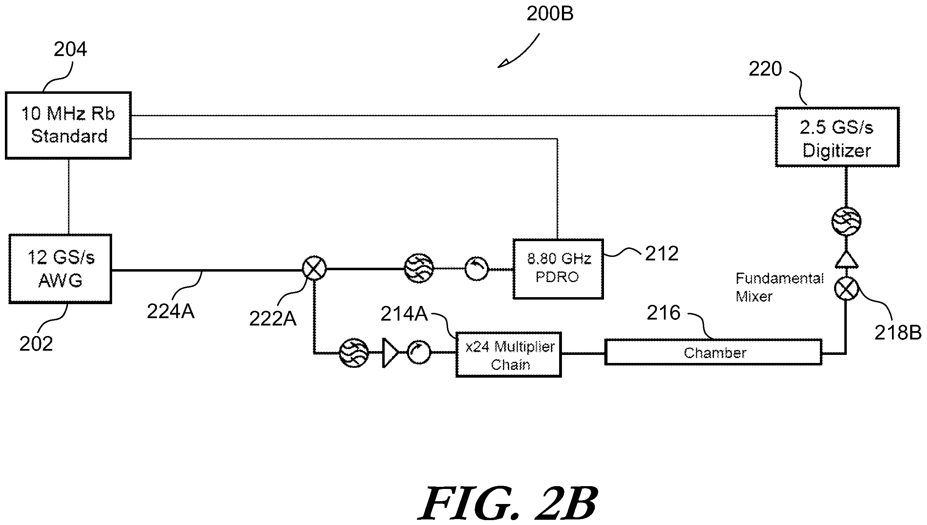

In another approach, the mixer and multiplier used for the downconversion LO signal can be the same as used for excitation of the sample **116**, and the path followed by the chirped-excitation pulse can be the same as the path followed by the downconversion LO signal (e.g., the chirped excitation signal delivered to the sample **116** can spatially overlap with the LO signal to be used in downconverting the received emissions), such as if the dotted portions are omitted from FIG. 1, and as shown in the illustrative example of FIG. 2B.

FIG. 2A illustrates generally an illustrative example of a mm-wave spectrometer system **200A**, such as operable in a frequency range from about 260 GHz to about 290 GHz, and including a sub-harmonic mixer **218A** having two input ports. In this illustrative example, the system **200A** can include an AWG **202** having two channels, such as including a first channel **224A** that can be used to generate the chirped excitation pulse (e.g., upconverted, frequency multiplied, or amplified before passing through a gaseous sample in a chamber **216**), and second channel **224B** to provide a specified downconversion LO frequency for use in downconverting the molecular free induction decay (FID) signal to a lower frequency range where it can be digitized by a digitizer **220**.

In the example of FIG. 2A, similar to the example of FIG. 1, a first mixer **222A** be used to upconvert a chirped waveform prior to multiplication by a 24x multiplier chain **214A**. One or more amplifiers, filters, or isolators (e.g., one or more circulators) can be used to further condition the chirped waveform, such as shown in the examples of FIGS. 2A and 2B. In the examples of FIGS. 2A and 2B, an 8.8 GHz phase-locked dielectric resonator oscillator (PDRO) **212** can provide an upconversion LO frequency to one or more of the first mixer **222A** or a second mixer **222B**.

In the example of FIG. 2A, the second mixer **222B** can upconvert the received downconversion LO frequency, such as using the PDRO **212**, and the resulting upconverted signal can then be frequency multiplied using a second frequency multiplier chain 214B, such as including a 12x multiplication factor. The sub-harmonic mixer 218 can provide an additional inherent 2x multiplication factor, such as for downconverting received emission from the sample within the chamber **216** into a bandwidth range suitable for the digitizer **220**, thus effectively the downconversion LO pathway can provide the same multiplication factor as the 24x multiplier chain **214A**.

In an illustrative example, such as to provide the experimentally-obtained information for the examples herein, the AWG **202** can use a sampling rate of about 12 Gs/s (e.g., about 83 picosecond (ps) time resolution). In an example, a single-channel AWG can be used in the sub-harmonic mixer design of FIG. 2A, such as by adding a single-pole double-throw (SPDT) switch to the first channel **224A** and directing the chirped pulse and LO signals to their respective multiplier chains.

FIG. 2B illustrates generally an illustrative example of a mm-wave spectrometer system **200B**, such as including a fundamental-mode mixer **218B** having two input ports. In an example, the fundamental-mode mixer **218B** can be used for mm-wave/THz downconversion to a frequency range suitable for the digitizer **220**. Generally, the fundamental-mode mixer **218B** uses an LO signal path and an excitation signal path that spatially overlap. The physics of chirped-pulse Fourier transform spectroscopy provides that the molecular emission follows the same path as the light from the excitation source. Therefore, the segmented CP-FT measurement can be made by using a single AWG channel that has the chirped pulse during a first duration followed by an LO frequency during a second duration, such as in a single waveform. Such a waveform can be transmitted through the sample and the molecules will emit their free induction decay following chirped-pulse excitation. Such FID emission can then mix with (e.g., beat against) the LO frequency being transmitted through the sample at the fundamental-mode mixer **218B.**

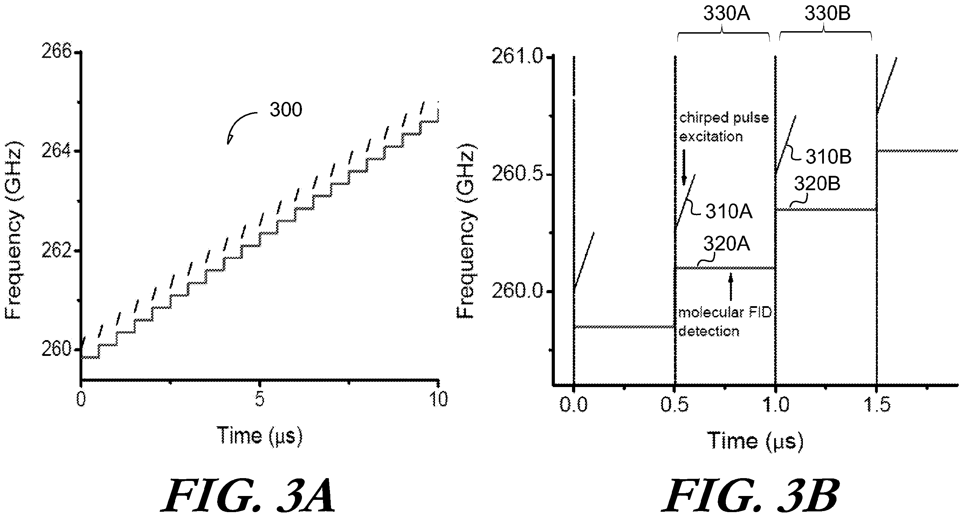

FIG. 3A illustrates generally an illustrative example of a spectrogram **300** that can represent respective DAC channel outputs, such as corresponding to a dual-channel example, and FIG. 3B illustrates generally a detailed view of a portion of FIG. 3A. A feature of CP-FT coherent spectroscopy techniques is that the sample excitation and FID downconversion process are separated in time. In FIG. 3B, a first chirped waveform **310A** and a specified first LO downconversion frequency **320A** can be provided during at least a portion of a first duration **330A** (e.g., a first "segment"). In a second "segment," a second chirped waveform **310B**, and a specified second LO downconversion frequency **320B** can be provided during at least a portion of a second duration **330B.**

The full available measurement bandwidth of the spectrum (e.g., determined by the bandwidth of the mm-wave/THz multiplier chains or by other system elements) can be segmented for the measurement. In an example, a single pass through the full spectrometer bandwidth can include a series of chirped excitation pulses and a respective downconversion LO frequencies. For example, the LO and chirp frequencies can be increased for each successive segment. For signal averaging in the time domain, the relative phase of the chirped pulse and LO for each segment are reproduced in each pass through the full spectrum. The use of an AWG provides phase reproducibility between sweeps, and provides a capability to switch the LO frequency (with phase lock) on time scales that are short compared to the molecular FID transients.

In an example, in a CP-FT segment, one channel of the arbitrary waveform generator can be used to provide a short-duration linear frequency sweep (e.g., a chirped waveform), which can then be upconverted such using a mixer coupled to a PDRO, and then multiplied after upconversion. Because the chirped waveform only includes a single frequency at any given time, the duration of the pulse is unchanged in the multiplication step but the bandwidth increases. This pulse interacts with a molecular gas sample, and can induce a macroscopic polarization when a rotational transition within the bandwidth of the excitation pulse is crossed. After the chirped pulse, the second AWG channel provides a single-frequency LO pulse that is offset from the sweep range by a small amount (e.g., to limit low-frequency spurious outputs or the effect of 1/*f* noise). The molecular sample can continue to emit radiation at the frequencies of the molecular transitions in the sweep range, and such radiation can be downconverted with the LO pulse and digitized. Each segment is Fourier transformed, and the segments are pieced together to create a broad-bandwidth spectrum.

In addition to overcoming digitizer bandwidth limitations, the segmented CP-FT approach can be more computationally efficient than determining a spectrum estimate for an entirety of the bandwidth being measured. For example, the number of computations included in a Cooley-Tukey fast Fourier transform technique can scale as *N* log₂ *N*, where *N* can represent the number of data points in the trace. Therefore, a segmented CP-FT spectrum can include fewer computations to Fourier transform a broad bandwidth spectrum than Fourier transforming a single spectrum covering the same total bandwidth.

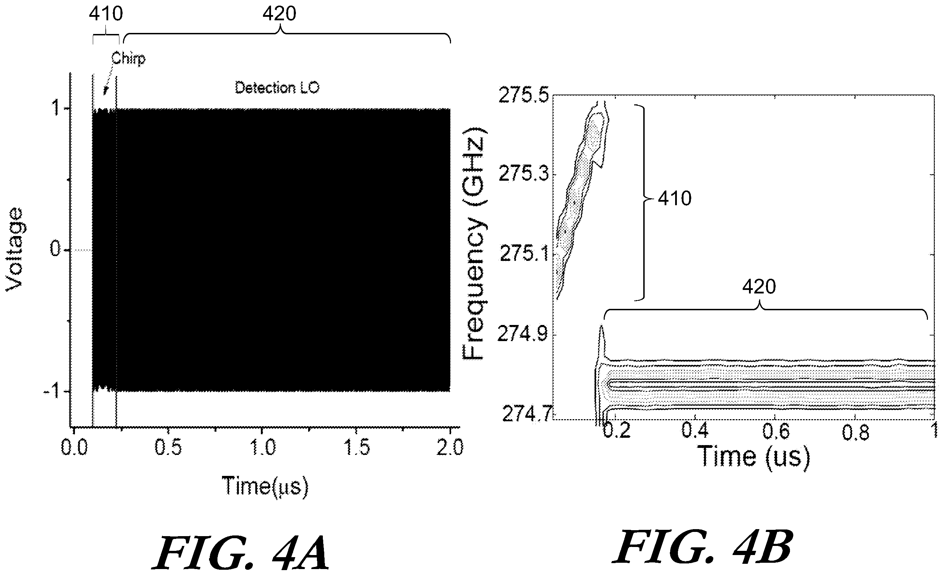

FIG. 4A illustrates generally an illustrative example of a measured time-domain waveform including a chirped pulse followed by a single-frequency LO pulse, and FIG. 4B illustrates generally a spectrogram of the time-domain waveform of FIG. 4A.

In the illustrative examples of FIGS. 4A and 4B, the time domain and spectrogram of a pulse includes a chirped excitation pulse **410** (e.g., about 125 nanoseconds (ns) duration) that can be followed by a single frequency LO pulse **420** (e.g., about 1.875 µs duration). The time-domain pulse of the illustrative example of FIG. 4A was obtained using the system **200A** of the example of FIG. 2A. In the illustrative example of FIG. 4B, the spectrogram, which shows only about the first 1 µs of the waveform spectrogram, clearly shows that the AWG-generated waveform includes a rapid chirped excitation pulse **410** followed by a single frequency output for use as the LO pulse **420**.

For example, a single AWG channel can be used because the excitation period and detection period are separated in time. Therefore, in an example, the AWG waveform in a respective measurement segment can include the chirped pulse **410**, such as followed immediately by the single frequency LO waveform **420**. Immediate switching between chirped excitation and single-frequency LO output modes is supported by the AWG. In a fundamental-mode mixer example, such as shown in FIG. 2B, the LO output is directed through the sample. In a sub-harmonic mixer example, a SPDT switch external to the AWG can be used to direct the chirped excitation pulse and the LO pulse for FID downconversion to respective multiplier chains.

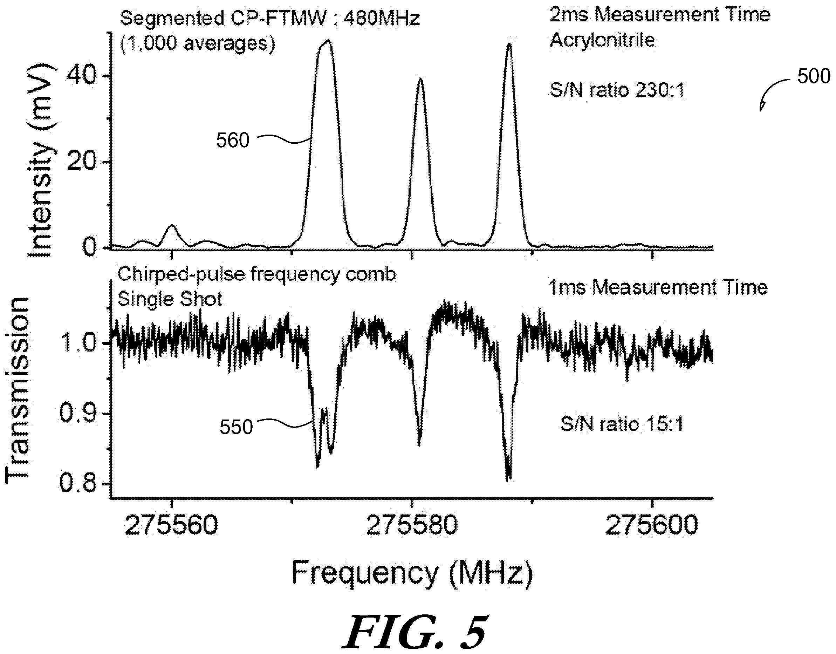

FIG. 5 illustrates generally an illustrative example **500** of a comparison between a transmission spectrum **550** experimentally obtained via direct-absorption spectroscopy technique using a broadband chirped-pulse frequency comb (CP-FC) spectrometer, and an emission spectrum **560** experimentally obtained via segmented CP-FT approach. Unlike absorption spectroscopy techniques, in a CP-FT approach, background calibration can be performed without a reference cell or sample evacuation.

Because the AWG output is generally not as pure in frequency as a phase-locked oscillator or synthesizer, spurious outputs can occur. In an example, to subtract these effects, a background trace can be collected before the chirped excitation pulse is delivered. For example, the molecular FID signals only occur after excitation by a chirped pulse, so the background trace can be collected in the presence of the gas sample, such as without requiring a reference cell. In experimentally-obtained samples, up to near 550 GHz, such background calibration was not necessary.

In one approach, a chirped-pulse frequency comb (CP-FC) technique can offer similar measurement speed, detection bandwidth, and frequency accuracy in comparison to the segmented CP-FT technique. However, in contrast to CP-FT, CP-FC spectroscopy is an absorption technique, so molecular signals are measured as depletions in the background pulse. As discussed above, for both microwave and infrared techniques, molecular FID emissions, which can be measured against much lower backgrounds, are generally more sensitive techniques for molecular spectroscopy.

In the illustrative example of FIG. 5, a rotational spectrum of vinyl cyanide (acrylonitrile, CH₂=CHCN) is shown. The sample pressure was 5 milliTorr (mTorr) with a 4 meter (m) path length. The spectra shown in FIG. 5 shows a portion of the full available 260-290 GHz measurement range. For equal measurement times (e.g., about 2 ms for the CP-FT and about 1 ms for the CP-FC - where the CP-FC measurement also included an additional 1 ms measurement of the background), the sensitivity in CP-FT can be about a factor of 10 higher (e.g., a signal-to-noise ratio (S/N) can be about 230:1 for the segmented CP-FT technique as compared to about 15:1 for the CP-FC technique).

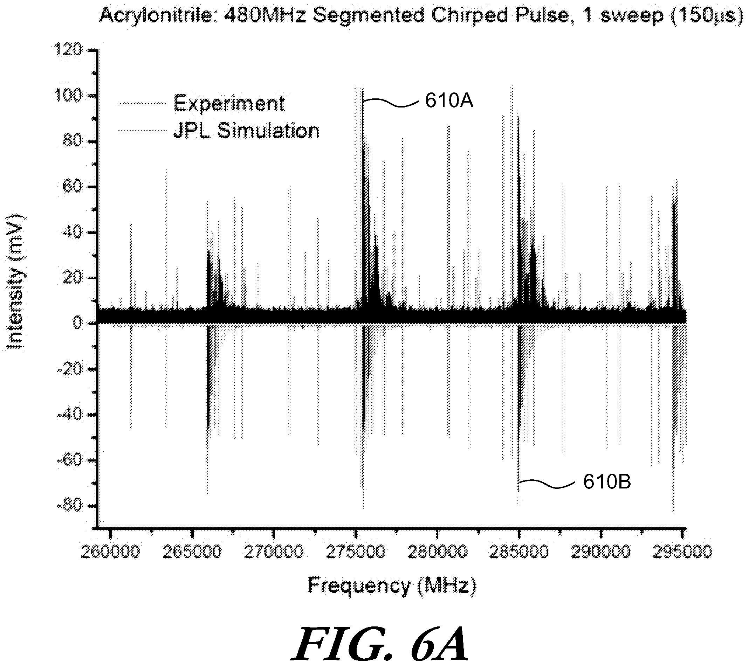

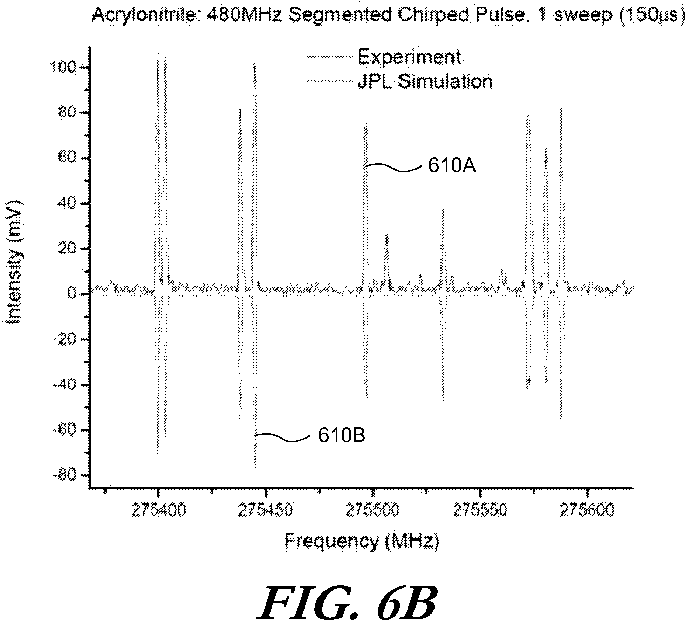

FIGS. 6A through 6B illustrate generally an illustrative example of an experimentally-obtained spectrum for vinyl cyanide from 260 GHz to 290 GHz, using a segmented CP-FT approach, as compared to a simulated spectrum. In FIGS. 6A and 6B, a measured spectrum **610A** can be compared to a simulated spectrum **610B**, the simulated spectrum **610B** provided using information from the NASA Jet Propulsion Laboratory (JPL) database. The experimentally-obtained spectrum **610A** was acquired using segments corresponding to chirped excitation pulses having about 480 MHz bandwidth, and the downconversion LO was offset by 240 MHz from the excitation bandwidth. The chirped pulse duration was 125 ns and the peak power of the mm-wave excitation pulse was 1 milliwatt (mW). The FID was digitized starting at 40 ns after the end of the excitation pulse (e.g., to allow the receiver to recover from saturation by the excitation pulse) and the FID was collected over a duration of 1.835 µs. The total time for each segment was 2 µs. There were 75 segments in the full spectrum for a total spectrum acquisition time of 150 µs. The sample pressure was about 5 mTorr and the path length was 4 m.

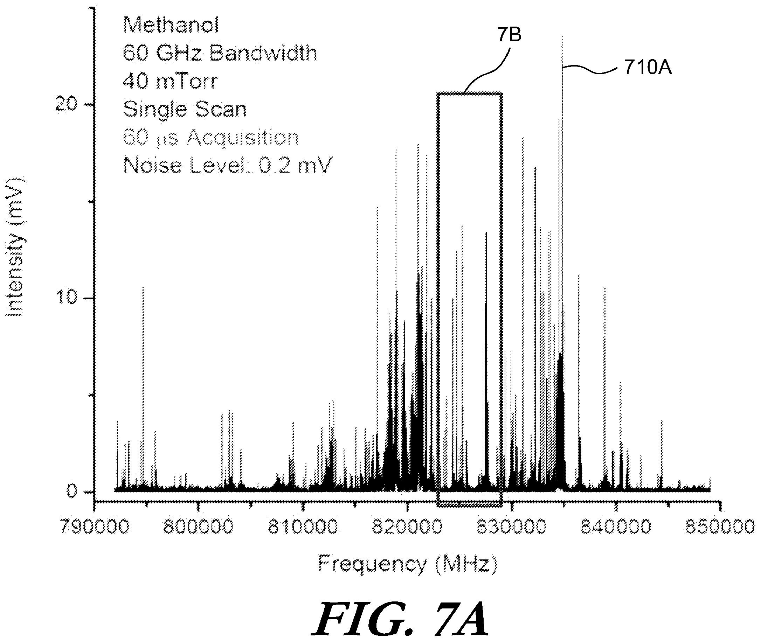

FIGS. 7A through 7B illustrate generally an illustrative example of an experimentally-obtained spectrum **710A** for methanol from 0.790 THz to 0.850 THz, using a segmented CP-FT approach, as compared to a simulated spectrum.

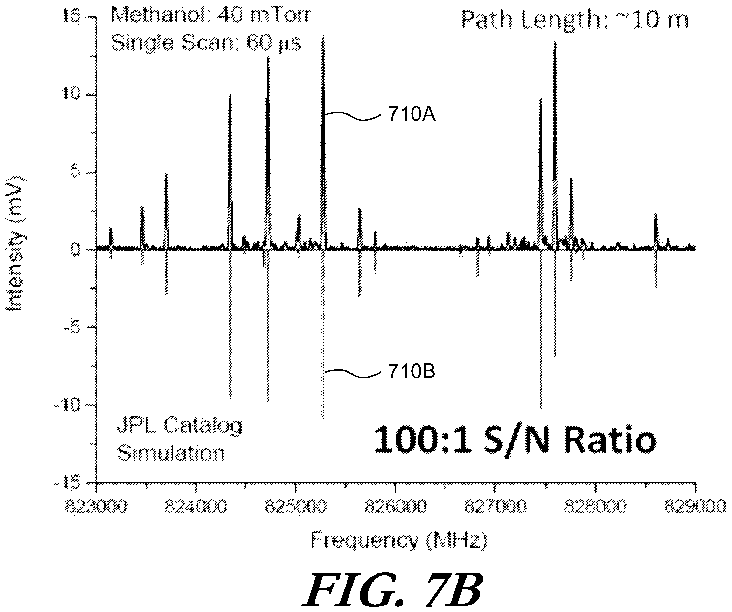

The frequency range of the example of FIGS. 7A and 7B was made available by adding an additional frequency tripler to the LO and chirped pulse excitation multiplier chains, using a configuration similar to the illustrative example of FIG. 2A. In this illustrative methanol measurement example, the chirped waveform bandwidth corresponding to each segment was also about 500 MHz. However, the faster dephasing (e.g., from Doppler broadening) at higher frequency (and lower sample mass) allowed reduction of the segment time duration to 500 ns. Approximately 60 GHz of spectrum was acquired using 120 segments and a total measurement time of 60 µs. The sample pressure was 40 mTorr and the path length about 10 m. In the illustrative example of FIG. 7B, a portion of the spectrum **710A** is compared to a simulated spectrum **710B** obtained using information from the NASA JPL catalog.

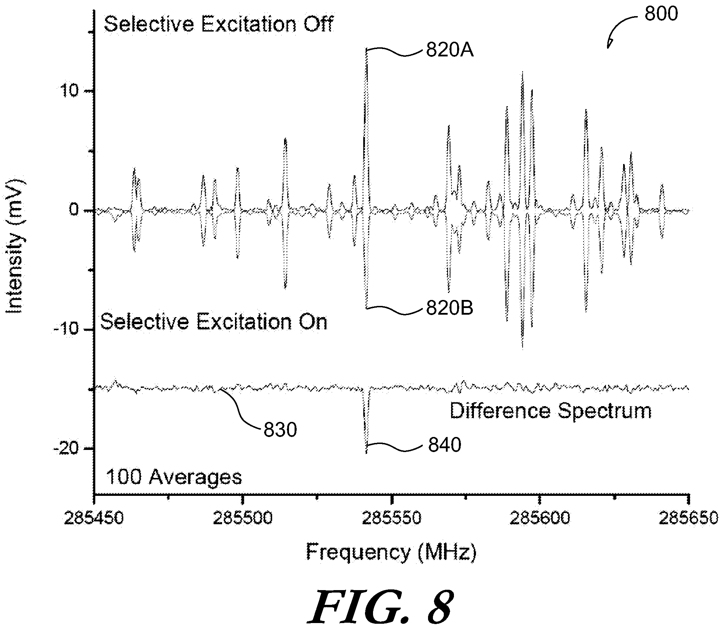

FIG. 8 illustrates generally an illustrative example **800** of experimentally-obtained spectra using a segmented CP-FT approach, and including a double-resonance measurement technique. As a coherent spectroscopy, the CP-FT method permits double-resonance measurements that can produce high signal modulation. Double-resonance spectroscopy can be a useful technique for identifying an unknown spectrum by showing the "connectivity" of the rotational spectroscopy transitions. Such connectivity occurs when transitions share a common quantum state. Such techniques can be especially useful when the measured spectrum comes from a complex mixture of different species.

In an example, a double-resonance measurement can include using three waveforms that can be separate in time and, for example, generated by a single AWG channel. In an illustrative example, two excitation pulses that interact with the molecular sample can be generated using one AWG channel, and the LO can be generated using a second AWG channel, such as in a sub-harmonic mixer design (e.g., as shown in the illustrative example of FIG. 2A).

In an example, the excitation pulses include first a chirped pulse that excites a segment of the rotational spectrum and coherently excited the sample, and a second pulse following the chirped-pulse, the second pulse comprising a single fixed frequency excitation. In an example, the frequency of the second pulse is selected to be coincident with a transition in the spectrum. The effect of this frequency-selective pulse can be to destroy the coherence for any transition that shares a quantum state with the selected "pumped" transition.

This causes a detectable reduction in the intensity of any transitions excited by the chirped pulse that are in "double-resonance." The illustrative example of FIG. 8 includes a double-resonance measurement for the vinyl cyanide (acrylonitrile) spectrum of FIGS. 6A and 6B. In this illustrative example, a chirped excitation pulse can polarize the sample in the frequency segment of 285.360- 285.840 GHz. As discussed in relation to FIG. 6A, a first spectrum can be experimentally obtained, such as including a rotational transition **820A** that has been previously analyzed and "assigned" as 30_{4,26} - 29_{4,25} (e.g., a standard asymmetric top quantum level designation of molecular spectroscopy: J_{Ka,Kc}).

The frequency for this transition is 285.5926 GHz. The selective excitation pulse included a frequency of 275.9974 GHz and is resonant with the previously assigned 29_{4,25} - 28_{4,24} transition. Because these two transitions share a quantum level (29_{4,25}), the selective excitation pulse reduces the signal intensity of the monitored 30_{4,26} - 29_{4,25} transition (by about 50%), at **820B**, without affecting nearby transitions not in double-resonance. The performance of the selective excitation double-resonance scheme is highlighted by displaying a difference spectrum **830** at the bottom of the figure, showing a prominent dip **840** corresponding to the 30_{4,26} - 29_{4,25} transition 820A at 285.5926 GHz.

In an example, double resonance spectroscopy can be used such as to create a 2-D spectrum showing all the pairs of transitions that share a quantum state in the spectrum, such as similar to techniques that can be used for 2-D nuclear magnetic resonance (NMR) spectroscopy. Because of the large number of individual measurements performed in the segmented CP-FT technique, a new double resonance measurement can be performed in every segment, allowing for faster determination of the 2-D spectrum, and allowing for more rapid interpretation of complex unknown spectra.

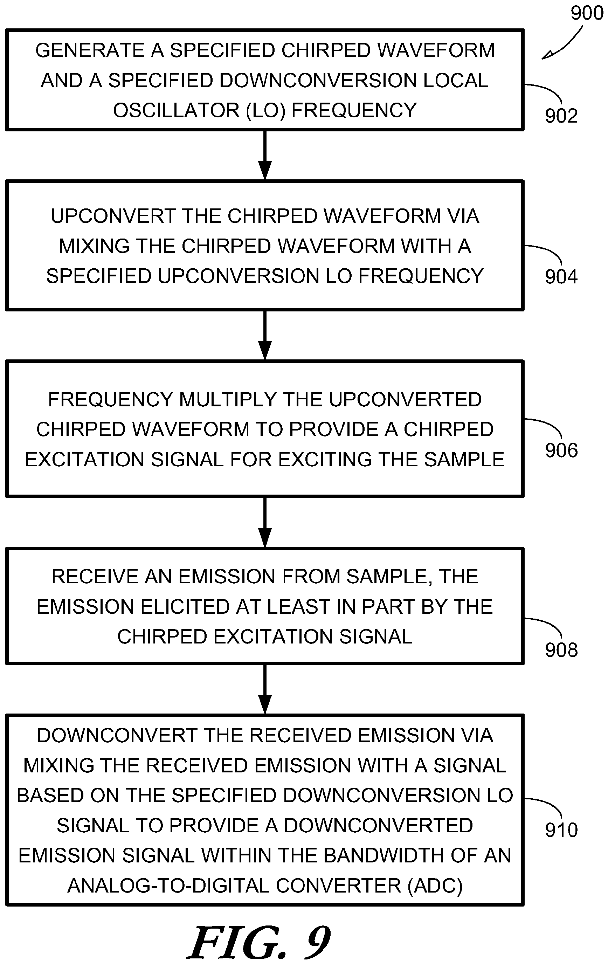

FIG. 9 illustrates generally a technique **900**, such as a method for obtaining an emission from a sample in response to excitation using a specified range of excitation frequencies. The technique **900** can include using one or more portions of the apparatus of the examples of FIGS. 1, 2A, or 2B.

At **902**, a specified chirped waveform and a specified downconversion LO frequency can be generated, such as using a high-speed DAC (e.g., an AWG or one or more other circuits or systems). At **904**, the chirped waveform can be upconverted, such as via mixing the chirped waveform with a specified upconversion LO frequency. At **906**, the upconverted chirped waveform can be frequency multiplied to provide a chirped excitation signal for exciting the sample.

At **908**, an emission can be received from the sample, the emission elicited at least in part by the chirped excitation signal. At **910**, the received emission can be downconverted, such as by mixing the received emission with a signal based on the specified downconversion LO signal to provide a downconverted emission signal within the bandwidth of an ADC converter. In an example, the technique can include a segmented CP-FT technique, such as including generating a first specified chirped waveform during a first duration, and a second chirped waveform during a second duration, the first and second chirped waveforms including respective bandwidths specified based at least in part on the bandwidth of the ADC and including a total bandwidth corresponding to the specified range of excitation frequencies.

In an illustrative example, the CP-FT techniques and apparatus described herein can be used to obtain high-sensitivity spectra across large bandwidths (e.g., up to about 100 GHz or more), with an acquisition time that can be about 1 ms or less. In an illustrative example, a relatively low digitizer detection bandwidth (e.g., less than about 1 GHz) can be used. Generally, using the CP-FT techniques described herein, the received signals can be coherently detected in the time domain, so signal averaging (or determination of one or more other central tendencies) can be performed, such as to enhance sensitivity as desired for a specific application.

Because the molecular signals can be digitized in the radio-frequency region of frequencies (rather than the mm-wave range), and the local oscillator sources are referenced to a high-precision (e.g., rubidium) frequency standard, the absolute frequency accuracy of the segmented CP-FT technique can be extremely high, such as limited only by the uncertainty in the molecular line width, and no calibrant is necessary. In contrast to CP-FT approaches, some other approaches require calibration such as using spectral lines of known frequency, or use of etalons, such as to correct for a nonlinearity of a frequency sweeping source on every scan.

### Various Notes & Examples

Example 1 can include subject matter (such as an apparatus, a method, a means for performing acts, or a machine readable medium including instructions that, when performed by the machine, that can cause the machine to perform acts), such as can include a method for obtaining an emission from a sample in response to excitation using a specified range of excitation frequencies, the method comprising generating a specified chirped waveform and a specified downconversion local oscillator (LO) frequency using a digital-to-analog converter (DAC), upconverting the chirped waveform via mixing the chirped waveform with a specified upconversion LO frequency, frequency multiplying the upconverted chirped waveform to provide a chirped excitation signal for exciting the sample, receiving an emission from the sample, the emission elicited at least in part by the chirped excitation signal, downconverting the received emission via mixing the received emission with a signal based on the specified downconversion LO signal to provide a downconverted emission signal within the bandwidth of an analog-to-digital converter (ADC). In Example 1, the generating the specified chirped waveform can include generating a first chirped waveform during a first duration, and a second chirped waveform during a second duration, the first and second chirped waveforms including respective bandwidths specified based at least in part on the bandwidth of the ADC and including a total bandwidth corresponding to the specified range of excitation frequencies.

Example 2 can include, or can optionally be combined with the subject matter of Example 1, to optionally include estimating a first spectrum corresponding to the specified range of excitation frequencies, including using information corresponding to respective emissions obtained during at least a portion of the first and second durations.

Example 3 can include, or can optionally be combined with the subject matter of one or any combination of Examples 1 or 2 to optionally include generating a specified fixed frequency to excite the sample after generating the chirped excitation signal, and estimating a second spectrum using information corresponding to an emission obtained from the sample in response to the chirped excitation signal and in response to the specified fixed frequency.

Example 4 can include, or can optionally be combined with the subject matter Example 3 to optionally include a specified fixed frequency that modulates an energy level transition of the sample after the sample is coherently excited using the chirped excitation signal.

Example 5 can include, or can optionally be combined with the subject matter of one or any combination of Examples 3 or 4 to optionally include D determining a relative indication of information using the estimated first and second spectra.

Example 6 can include, or can optionally be combined with the subject matter of one or any combination of Examples 1 through 5 to optionally include receiving respective first and second downconverted received emissions obtained via repeating the chirped excitation of the sample, and determining a central tendency of information obtained from the first and second downconverted received emissions.

Example 7 can include, or can optionally be combined with the subject matter of one or any combination of Examples 1 through 6 to optionally include receiving an emission comprising a free-induction decay emission from a sample comprising a gaseous species.

Example 8 can include, or can optionally be combined with the subject matter of one or any combination of Examples 1 through 7 to optionally include generating the specified chirped waveform includes using a first channel of an arbitrary waveform generator (AWG), the generating the specified downconversion LO frequency including using a second channel of an AWG, and the downconverting the emission signal including using a sub-harmonic mixer comprising a first port configured to receive the signal based on the specified downconversion LO frequency, a second port configured to receive the emission; and a third port configured to provide the downconverted emission signal within the bandwidth of the ADC.

Example 9 can include, or can optionally be combined with the subject matter of one or any combination of Examples 1 through 7 to optionally include E upconverting the specified downconversion LO frequency and frequency multiplying the upconverted output to provide the signal based on the downconversion LO frequency, the downconverting the emission including using a fundamental mode mixer comprising a single input port configured to receive the signal based on the downconversion LO frequency and the emission, and a second port configured to provide the downconverted emission signal, the signal based on the LO frequency propagating via the same spatial path as the chirped excitation signal and the elicited emission.

Example 10 can include, or can optionally be combined with the subject matter of one or any combination of Examples 1 through 9 to optionally include a frequency reference comprising a precision oscillator configured to provide a reference frequency based at least in part on an atomic or molecular energy level transition.

Example 11 can include, or can optionally be combined with the subject matter of one or any combination of Examples 1-10 to include, subject matter (such as an apparatus, a method, a means for performing acts, or a machine readable medium including instructions that, when performed by the machine, that can cause the machine to perform acts), such as can include a digital-to-analog converter (DAC) coupled to a frequency reference and configured to provide a specified chirped waveform and a specified downconversion local oscillator (LO) frequency, a phase-locked oscillator coupled to the frequency reference and configured to provide a specified upconversion LO frequency, a first mixer configured to receive the specified chirp waveform from the DAC and the specified upconversion LO frequency from the phase-locked oscillator, and configured to provide an upconverted chirped waveform, a frequency multiplier configured to receive the upconverted chirped waveform and configured to provide a chirped excitation signal for exciting a sample, and a second mixer configured to receive an emission from the sample, the emission elicited at least in part by the chirped excitation signal, the second mixer configured to receive the specified downconversion LO frequency from the DAC, and configured to provide an output signal within the bandwidth of an analog-to-digital converter. In Example 11, the DAC can be configured to generate a first specified chirped waveform during a first duration, and a second chirped waveform during a second duration, the first and second chirped waveforms including respective bandwidths specified based at least in part on the bandwidth of the ADC and including a total bandwidth corresponding to the specified range of excitation frequencies.

Example 12 can include, or can optionally be combined with the subject matter of Example 11, to optionally include an ADC coupled to the second mixer, and a processor coupled to the ADC, the processor configured to estimate a first spectrum corresponding to the specified range of excitation frequencies, including using information corresponding to respective emissions obtained during at least a portion of the first and second durations.

Example 13 can include, or can optionally be combined with the subject matter of Example 12, to optionally include a DAC configured to generate a specified fixed frequency to excite the sample after generating the chirped excitation signal, and a processor configured to estimate a second spectrum using information corresponding to an emission obtained from the sample in response to the chirped excitation signal and in response to the specified fixed frequency.

Example 14 can include, or can optionally be combined with the subject matter of one or any combination of Examples 11 through 13 to optionally include an emission comprising a free-induction decay emission from a sample comprising a gaseous species.

Example 15 can include, or can optionally be combined with the subject matter of one or any combination of Examples 11 through 14 to optionally include an arbitrary waveform generator (AWG) including the DAC, the AWG configured to generate the specified chirped waveform using a first channel of the AWG, and configured to generate the specified downconversion LO frequency using the second channel of the AWG, and a second mixer comprising a sub-harmonic mixer including a first port configured to receive the signal based on the specified downconversion LO frequency, a second port configured to receive the emission; and a third port configured to provide the downconverted emission signal within the bandwidth of the ADC.

Example 16 can include, or can optionally be combined with the subject matter of one or any combination of Examples 11 through 14 to optionally include a third mixer configured to upconvert the specified downconversion LO frequency to provide an upconverted output, and a second frequency multiplier configured to frequency multiply the upconverted output to provide the signal based on the downconversion LO frequency, the second mixer comprising a fundamental mode mixer including a single input port configured to receive the signal based on the downconversion LO frequency and the emission, and a second port configured to provide the downconverted emission signal, and the signal based on the LO frequency propagating via the same spatial path as the chirped excitation signal and the elicited emission.

Example 17 can include, or can optionally be combined with the subject matter of one or any combination of Examples 11 through 16 to optionally include a frequency reference including a precision oscillator configured to provide a reference frequency derived at least in part from an atomic or molecular energy level transition.

Example 18 can include, or can optionally be combined with any portion or combination of any portions of any one or more of Examples 1-17 to include, subject matter that can include means for performing any one or more of the functions of Examples 1-20, or a machine-readable medium including instructions that, when performed by a machine, cause the machine to perform any one or more of the functions of Examples 1-20.
Each of these non-limiting examples can stand on its own, or can be combined in various permutations or combinations with one or more of the other examples.

## Claims

1. A method for measurement of rotational spectra of molecules in a gaseous sample (116) in response to excitation using a specified range of excitation frequencies selected from the microwave to terahertz range, the method comprising:
generating a specified chirped waveform and a specified downconversion local oscillator (LO) frequency using a digital-to-analog converter (DAC) (102);
upconverting the chirped waveform via mixing the chirped waveform with a specified upconversion LO frequency;
frequency multiplying the upconverted chirped waveform to provide a chirped excitation signal for exciting the gaseous sample (116);
receiving an emission from the gaseous sample (116), the emission indicative of a free induction decay (FID) elicited at least in part by the chirped excitation signal; and
downconverting the received emission via mixing the received emission with a signal based on the specified downconversion LO signal to provide a downconverted emission signal to an analog-to-digital converter (ADC) (120), the down-converted emission signal being within the bandwidth of the ADC (120);
wherein the generating the specified chirped waveform includes generating a first chirped waveform during a first duration, and a second chirped waveform during a second duration, the first and second chirped waveforms including respective different frequency ranges, the different frequency ranges having respective bandwidths each specified to be within the bandwidth of the ADC (120) and resulting in received emissions including a total bandwidth corresponding to the specified range of excitation frequencies when the received emissions are received sequentially and aggregated to encompass a bandwidth wider than the bandwidth of the ADC (120).

2. The method of claim 1, comprising estimating a first spectrum corresponding to the specified range of excitation frequencies, including using information corresponding to respective emissions obtained during at least a portion of the first and second durations.

3. The method of claim 2, comprising generating a specified fixed frequency to excite the gaseous sample (116) after generating the chirped excitation signal; and
estimating a second spectrum using information corresponding to an emission obtained from the sample (116) in response to the chirped excitation signal and in response to the specified fixed frequency signal.

4. The method of claim 3, wherein the specified fixed frequency modulates an energy level transition of the gaseous sample (116) after the gaseous sample (116) is coherently excited using the chirped excitation signal.

5. The method of any one of claims 3 or 4, comprising determining a relative indication of information using the estimated first and second spectra.

6. The method of any one of claims 1 through 5, comprising receiving respective first and second downconverted received emissions obtained via repeating the chirped excitation of the gaseous sample (116); and
determining a central tendency of information obtained from the first and second downconverted received emissions.

7. The method of any one of claims 1 through 6, wherein generating the specified chirped waveform includes using a first channel of an arbitrary waveform generator (AWG);
wherein generating the specified downconversion LO frequency includes using a second channel of the AWG; and
wherein downconverting the emission signal includes using a sub-harmonic mixer comprising a first port configured to receive the signal based on the specified downconversion LO frequency, a second port configured to receive the emission; and a third port configured to provide the downconverted emission signal within the bandwidth of the ADC (120).

8. The method of any one of claims 1 through 6, comprising upconverting the specified downconversion LO frequency and frequency multiplying the upconverted output to provide the signal based on the downconversion LO frequency;
wherein downconverting the emission includes using a fundamental mode mixer comprising a single input port configured to receive the signal based on the downconversion LO frequency and the emission, and a second port configured to provide the downconverted emission signal; and
wherein the signal based on the LO frequency propagates via the same spatial path as the chirped excitation signal and the elicited emission.

9. The method of any one of claims 1 through 8, wherein the frequency reference (104) comprises a precision oscillator configured to provide a reference frequency based at least in part on an atomic or molecular energy level transition.

10. A system for measurement of rotational spectra of molecules in a gaseous sample (116) in response to excitation using a specified range of excitation frequencies selected from the microwave to terahertz range, comprising:
a digital-to-analog converter (DAC) (102) coupled to a frequency reference (104) and configured to provide a specified chirped waveform and a specified downconversion local oscillator (LO) frequency;
a phase-locked oscillator coupled to the frequency reference (104) and configured to provide a specified upconversion LO frequency;
a first mixer (122A) configured to receive the specified chirp waveform from the DAC (102) and the specified upconversion LO frequency from the phase-locked oscillator, and configured to provide an upconverted chirped waveform;
a frequency multiplier configured to receive the upconverted chirped waveform and configured to provide a chirped excitation signal for exciting the gaseous sample (116);
a second mixer (118) configured to receive an emission indicative of a free induction decay (FID) from the gaseous sample (116), the emission elicited at least in part by the chirped excitation signal, the second mixer (118) configured to receive the specified downconversion LO frequency from the DAC (102), and configured to provide an output signal within the bandwidth of an analog-to-digital converter; and
an analog-to-digital converter (ADC) (120) coupled to the second mixer (118);
wherein the DAC (102) is configured to generate a first specified chirped waveform during a first duration, and a second chirped waveform during a second duration, the first and second chirped waveforms including respective different frequency ranges, the different frequency ranges having respective bandwidths each specified to be within the bandwidth of the ADC (120) and resulting in received emissions including a total bandwidth corresponding to the specified range of excitation frequencies when the received emissions are received sequentially and aggregated to encompass a bandwidth wider than the bandwidth of the ADC (120).

11. The system of claim 10, comprising
a processor coupled to the ADC (120), the processor configured to estimate a first spectrum corresponding to the specified range of excitation frequencies, including using information corresponding to respective emissions obtained during at least a portion of the first and second durations.

12. The system of claim 11, wherein the DAC (102) is configured to generate a specified fixed frequency to excite the gaseous sample (116) after generating the chirped excitation signal; and
wherein the processor is configured to estimate a second spectrum using information corresponding to an emission obtained from the gaseous sample (116) in response to the chirped excitation signal and in response to the specified fixed frequency.

13. The system of any one of claims 10 through 12, comprising an arbitrary waveform generator (AWG) including the DAC (102), the AWG configured to generate the specified chirped waveform using a first channel of the AWG, and configured to generate the specified downconversion LO frequency using a second channel of the AWG; and
wherein the second mixer (118) comprises a sub-harmonic mixer including a first port configured to receive the signal based on the specified downconversion LO frequency, a second port configured to receive the emission; and a third port configured to provide the downconverted emission signal within the bandwidth of the ADC (120).

14. The system of any one of claims 10 through 13, comprising a third mixer configured to upconvert the specified downconversion LO frequency to provide an upconverted output; and
a second frequency multiplier configured to frequency multiply the upconverted output to provide the signal based on the downconversion LO frequency;
wherein the second mixer (118) comprises a fundamental mode mixer including a single input port configured to receive the signal based on the downconversion LO frequency and the emission, and a second port configured to provide the downconverted emission signal; and
wherein the signal based on the LO frequency propagates via the same spatial path as the chirped excitation signal and the elicited emission.

15. The system of any one of claims 10 through 14, comprising the frequency reference (104) including a precision oscillator configured to provide a reference frequency derived at least in part from an atomic or molecular energy level transition.

## Patentansprüche

1. Verfahren zum Messen von Rotationsspektren von Molekülen in einer gasförmigen Probe (116) als Reaktion auf eine Erregung unter Verwendung eines vorgegebenen Bereichs von Erregungsfrequenzen, die ausgewählt sind aus dem Mikrowellen-bis-Terahertz-Bereich, wobei das Verfahren umfasst:
Erzeugen einer vorgegebenen gechirpten Wellenform und einer vorgegebenen Abwärtswandlungs-Lokaloszillator(LO)-Frequenz unter Verwendung eines Digital-zu-Analog-Wandlers (DAC) (102);
Aufwärtswandeln der gechirpten Wellenform mittels Mischens der gechirpten Wellenform mit einer vorgegebenen Aufwärtswandlungs-LO-Frequenz;
Vervielfachen der Frequenz der aufwärtsgewandelten gechirpten Wellenform, um ein gechirptes Erregungssignal zum Erregen der gasförmigen Probe (116) bereitzustellen;
Empfangen einer Emission von der gasförmigen Probe (116), wobei die Emission einen freien Induktionszerfall (FID) anzeigt, der zumindest zum Teil von dem gechirpten Erregungssignal hervorgerufen wird; und
Abwärtswandeln der empfangenen Emission anhand des Mischens der empfangenen Emission mit einem Signal auf Basis des vorgegebenen Abwärtswandlungs-LO-Signals, um ein abwärtsgewandeltes LO-Signal für einen Analog-zu-Digital-Wandler (ADC) (120) bereitzustellen, wobei das abwärtsgewandelte LO-Signal innerhalb der Bandbreite des ADC (120) liegt;
wobei das Erzeugen der vorgegebenen gechirpten Wellenform das Erzeugen einer ersten gechirpten Wellenform während einer ersten Zeitspanne und einer zweiten gechirpten Wellenform während einer zweiten Zeitspanne umfasst, wobei die erste und die zweite gechirpte Wellenform jeweils unterschiedliche Frequenzbereiche aufweisen, wobei die unterschiedlichen Frequenzbereiche jeweils Bandbreiten aufweisen, von denen jede so vorgegeben ist, dass sie innerhalb der Bandbreite des ADC (120) liegt, und zu empfangenen Emissionen führen, die eine Gesamtbandbreite aufweisen, die dem vorgegebenen Bereich von Erregungsfrequenzen entspricht, wenn die empfangenen Emissionen nacheinander empfangen und zusammengefasst werden, um eine Bandbreite abzudecken, die breiter ist als die Bandbreite des ADC (120).

2. Verfahren nach Anspruch 1, das Schätzen eines ersten Spektrums umfassend, das dem vorgegebenen Bereich von Erregungsfrequenzen entspricht, einschließlich der Verwendung von Informationen, die den jeweiligen Emissionen entsprechen, die während zumindest eines Teils der ersten und der zweiten Zeitspanne erhalten werden.

3. Verfahren nach Anspruch 2, umfassend: Erzeugen einer vorgegebenen festen Frequenz zum Erregen der gasförmigen Probe (116) nach dem Erzeugen des gechirpten Erregungssignals; und
Schätzen eines zweiten Spektrums unter Verwendung von Informationen, die einer Emission entsprechen, die von der Probe (116) erhalten wird, als Reaktion auf das gechirpte Erregungssignal und als Reaktion auf das vorgegebene Signal mit der festen Frequenz.

4. Verfahren nach Anspruch 3, wobei die vorgegebene feste Frequenz einen Energieniveauübergang der gasförmigen Probe (116) moduliert, nachdem die gasförmige Probe (116) anhand des gechirpten Erregungssignals kohärent erregt worden ist.

5. Verfahren nach einem der Ansprüche 3 oder 4, das Bestimmen eines relativen Hinweises auf Informationen anhand des geschätzten ersten und zweiten Spektrums umfassend.

6. Verfahren nach einem der Ansprüche 1 bis 5, das Empfangen jeweiliger erster und zweiter abwärtsgewandelter empfangener Emissionen umfassend, die durch Wiederholen der gechirpten Erregung der gasförmigen Probe (116) erhalten werden; und
Bestimmen einer zentralen Tendenz von Informationen, die aus den ersten und zweiten abwärtsgewandelten empfangenen Emissionen erhalten werden.

7. Verfahren nach einem der Ansprüche 1 bis 6, wobei das Erzeugen der vorgegebenen gechirpten Wellenform das Verwenden eines ersten Kanals eines Arbiträrwellenformgenerators (AWG) beinhaltet;
wobei das Erzeugen der vorgegebenen Abwärtswandlungs-LO-Frequenz das Verwenden eines zweiten Kanals des AWG beinhaltet; und
wobei das Abwärtswandeln des Emissionssignals das Verwenden eines subharmonischen Mischers beinhaltet, der umfasst: einen ersten Anschluss, der dafür ausgelegt ist, das Signal auf Basis der vorgegebenen Abwärtswandlungs-(LO)-Frequenz zu empfangen, einen zweiten Anschluss, der dafür ausgelegt ist, die Emission zu empfangen; und einen dritten Anschluss, der dafür ausgelegt ist, das abwärtsgewandelte Emissionssignal innerhalb der Bandbreite des ADC (120) zu empfangen.

8. Verfahren nach einem der Ansprüche 1 bis 6, das Aufwärtswandeln der vorgegebenen Abwärtswandlungs-LO-Frequenz und das Vervielfachen der Frequenz der aufwärtsgewandelten Ausgabe umfassend, um das Signal auf Basis der Abwärtswandlungs-LO-Frequenz bereitzustellen;
wobei das Abwärtswandeln der Emission das Verwenden eines Fundamentalmodenmischers beinhaltet, der umfasst: einen einzigen Eingangsanschluss, der dafür ausgelegt ist, das Signal auf Basis der Abwärtswandlungs-LO-Frequenz und der Emission zu empfangen, und einen zweiten Anschluss, der dafür ausgelegt ist, das abwärtsgewandelte Emissionssignal bereitzustellen;
wobei sich das Signal auf Basis der LO-Frequenz auf dem gleichen Weg im Raum ausbreitet wie das gechirpte Erregungssignal und die hervorgerufene Emission.

9. Verfahren nach einem der Ansprüche 1 bis 8, wobei die Frequenzreferenz (104) einen Präzisionsoszillator umfasst, der dafür ausgelegt ist, zumindest zum Teil auf Basis eines atomaren oder molekularen Energieniveauübergangs eine Bezugsfrequenz bereitzustellen.

10. System zum Messen von Rotationsspektren von Molekülen in einer gasförmigen Probe (116) als Reaktion auf eine Erregung unter Verwendung eines vorgegebenen Bereichs von Erregungsfrequenzen, ausgewählt aus dem Mikrowellen-bis-Terahertz-Bereich, umfassend:
einen Digital-zu-Analog-Wandler (DAC) (102), der mit einem Frequenzbezug (104) gekoppelt ist und dafür ausgelegt ist, eine vorgegebene gechirpte Wellenform und eine vorgegebene Abwärtswandlungs-Lokaloszillator(LO)-Frequenz bereitzustellen;
einen phasengeregelten Oszillator, der mit dem Frequenzbezug (104) gekoppelt und dafür ausgelegt ist, eine vorgegebene Aufwärtswandlungs-LO-Frequenz bereitzustellen;
einen ersten Mischer (122A), der dafür ausgelegt ist, die vorgegebene Chirp-Wellenform vom DAC (102) und die vorgegebene Aufwärtswandlungs-LO-Frequenz vom phasengeregelten Oszillator zu empfangen, und dafür ausgelegt ist, eine aufwärtsgewandelte gechirpte Wellenform bereitzustellen
einen Frequenzvervielfacher, der dafür ausgelegt ist, die aufwärtsgewandelte gechirpte Wellenform zu empfangen und ein gechirptes Erregungssignal zum Erregen der gasförmigen Probe (116) bereitzustellen;
einen zweiten Mischer (118), der dafür ausgelegt ist, eine Emission zu empfangen, die einen freien Induktionszerfall (FID) aus der gasförmigen Probe (116) anzeigt, wobei die Emission zumindest zum Teil durch das gechirpte Emissionssignal hervorgerufen wird, wobei der zweite Mischer (118) dafür ausgelegt ist, die vorgegebene Abwärtswandlungs-LO-Frequenz vom DAC (102) zu empfangen, und dafür ausgelegt ist, ein Ausgangssignal innerhalb der Bandbreite eines Analog-zu-Digital-Wandlers bereitzustellen; und
einen Analog-zu-Digital-Wandler (ADC) (120), der mit dem zweiten Mischer (118) gekoppelt ist;
wobei der DAC (102) dafür ausgelegt ist, eine erste vorgegebene gechirpte Wellenform während einer ersten Zeitdauer zu erzeugen und eine zweite gechirpte Wellenform während einer zweiten Zeitdauer zu erzeugen, wobei die erste und die zweite gechirpte Wellenform jeweils andere Frequenzbereiche aufweisen, wobei die jeweils anderen Frequenzbereiche entsprechende Bandbreiten aufweisen, die jeweils so vorgegeben sind, dass sie innerhalb der Bandbreite des ADC (120) liegen, und dazu führen, dass empfangene Emissionen eine Gesamtbandbreite aufweisen, die dem vorgegebenen Bereich von Erregungsfrequenzen entspricht, wenn die empfangenen Emissionen nacheinander empfangen werden und zusammengefasst werden, um eine Bandbreie abzudecken, die breiter ist als die Bandbreite des ADC (120).

11. System nach Anspruch 10, umfassend:
einen Prozessor, der mit dem ADC (120) gekoppelt ist, wobei der Prozessor dafür ausgelegt ist, ein erstes Spektrum zu schätzen, das dem vorgegebenen Bereich von Erregungsfrequenzen entspricht, was einschließt: Verwenden von Informationen, die entsprechenden Emissionen entsprechen, die zumindest während eines Teils der ersten und der zweiten Zeitdauer erhalten werden.

12. System nach Anspruch 11, wobei der DAC (102) dafür ausgelegt ist, eine vorgegebene erste Frequenz zu erzeugen, um die gasförmige Probe (116) zu erregen, nachdem das erste gechirpte Erregungssignal erzeugt wurde, und
wobei der Prozessor dafür ausgelegt ist, ein zweites Spektrum unter Verwendung von Informationen zu schätzen, die einer Emission entsprechen, die als Reaktion auf das gechirpte Erregungssignal und als Reaktion auf die vorgegebene feste Frequenz aus der gasförmigen Probe (116) empfangen wird.

13. System nach einem der Ansprüche 10 bis 12, einen Arbiträrwellenformgenerator (AWG) umfassend, der den DAC (102) umfasst, wobei der AWG dafür ausgelegt ist, die vorgegebene gechirpte Wellenform unter Verwendung eines ersten Kanals des AWG zu erzeugen, und dafür ausgelegt ist, die vorgegebene Abwärtswandlungs-LO-Frequenz unter Verwendung eines zweiten Kanals des AWG zu erzeugen; und
wobei der zweite Mischer (118) einen subharmonischen Mischer umfasst, der aufweist: einen ersten Anschluss, der dafür ausgelegt ist, das Signal auf Basis der vorgegebenen Abwärtswandlungs-(LO)-Frequenz zu empfangen, einen zweiten Anschluss, der dafür ausgelegt ist, die Emission zu empfangen; und einen dritten Anschluss, der dafür ausgelegt ist, das abwärtsgewandelte Emissionssignal innerhalb der Bandreite des ADC (120) zu empfangen.

14. System nach einem der Ansprüche 10 bis 13, einen dritten Mischer umfassend, der dafür ausgelegt ist, die vorgegebene Abwärtswandlungs-LO-Frequenz aufwärtszuwandeln, um eine aufwärtsgewandelte Ausgabe bereitzustellen; und
einen zweiten Frequenzvervielfacher, der dafür ausgelegt ist, die aufwärtswandelte Ausgabe zu vervielfachen, um das Signal auf Basis der Abwärtswandlungs-LO-Frequenz bereitzustellen;
wobei der zweite Mischer (118) einen Fundamentalmodenmischer umfasst, der aufweist: einen einzigen Eingangsanschluss, der dafür ausgelegt ist, das Signal auf Basis der Abwärtswandlungs-LO-Frequenz und der Emission zu empfangen, und einen zweiten Anschluss, der dafür ausgelegt ist, das abwärtsgewandelte Emissionssignal bereitzustellen; und
wobei sich das Signal auf Basis der LO-Frequenz auf dem gleichen Weg im Raum ausbreitet wie das gechirpte Erregungssignal und die hervorgerufene Emission.

15. System nach einem der Ansprüche 10 bis 14, den Frequenzbereich (104) umfassend, der einen Präzisionsoszillator aufweist, der dafür ausgelegt ist, eine Bezugsfrequenz bereitzustellen, die zumindest zum Teil von einem atomaren oder molekularen Energieniveauübergang abgeleitet ist.

## Revendications

1. Procédé pour la mesure de spectres de rotation de molécules dans un échantillon de gaz (116) en réponse à une excitation en utilisant une plage spécifiée de fréquences d'excitation qui sont sélectionnées à l'intérieur de la plage qui va des hyperfréquences aux TeraHertz, le procédé comprenant :
la génération d'une forme d'onde comprimée spécifiée et d'une fréquence spécifiée d'oscillateur local (LO) de conversion abaisseuse en utilisant un convertisseur numérique - analogique (DAC) (102) ;
la conversion élévatrice de la forme d'onde comprimée via le mélange de la forme d'onde comprimée avec une fréquence spécifiée de LO de conversion élévatrice ;
la multiplication en termes de fréquence de la forme d'onde comprimée soumise à conversion élévatrice de manière à obtenir un signal d'excitation comprimé pour exciter l'échantillon de gaz (116) ;
la réception d'une émission en provenance de l'échantillon de gaz (116), l'émission étant indicative d'une décroissance d'induction libre (FID) qui est déclenchée au moins en partie par le signal d'excitation comprimé ; et
la conversion abaisseuse de l'émission reçue via le mélange de l'émission reçue avec un signal qui est basé sur le signal spécifié de LO de conversion abaisseuse de manière à appliquer un signal d'émission soumis à conversion abaisseuse sur un convertisseur analogique - numérique (ADC) (120), le signal d'émission soumis à conversion abaisseuse étant à l'intérieur de la bande passante de l'ADC (120) ; dans lequel :
la génération de la forme d'onde comprimée spécifiée inclut la génération d'une première forme d'onde comprimée pendant une première durée et d'une seconde forme d'onde comprimée pendant une seconde durée, les première et seconde formes d'onde comprimées incluant des plages de fréquences différentes respectives, les plages de fréquences différentes présentant des bandes passantes respectives dont chacune est spécifiée de manière à ce qu'elle soit à l'intérieur de la bande passante de l'ADC (120) et aboutissant à des émissions reçues qui incluent une bande passante totale qui correspond à la plage spécifiée de fréquences d'excitation lorsque les émissions reçues sont reçues de façon séquentielle et sont agrégées de manière à ce qu'elles englobent une bande passante plus large que la bande passante de l'ADC (120).

2. Procédé selon la revendication 1, comprenant l'estimation d'un premier spectre qui correspond à la plage spécifiée de fréquences d'excitation, incluant l'utilisation d'une information qui correspond à des émissions respectives qui sont obtenues pendant au moins une partie des première et seconde durées.

3. Procédé selon la revendication 2, comprenant : la génération d'une fréquence fixe spécifiée de manière à exciter l'échantillon de gaz (116) après la génération du signal d'excitation comprimé ; et
l'estimation d'un second spectre en utilisant une information qui correspond à une émission qui est obtenue à partir de l'échantillon (116) en réponse au signal d'excitation comprimé et en réponse au signal de fréquence fixe spécifiée.

4. Procédé selon la revendication 3, dans lequel la fréquence fixe spécifiée module une transition de niveau d'énergie de l'échantillon de gaz (116) après que l'échantillon de gaz (116) est excité de façon cohérente en utilisant le signal d'excitation comprimé.

5. Procédé selon l'une quelconque des revendications 3 ou 4, comprenant la détermination d'une indication relative d'une information en utilisant les premier et second spectres estimés.

6. Procédé selon l'une quelconque des revendications 1 à 5, comprenant : la réception de première et seconde émissions reçues soumises à conversion abaisseuse respectives qui sont obtenues via la répétition de l'excitation comprimée de l'échantillon de gaz (116) ; et
la détermination d'une tendance centrale d'une information qui est obtenue à partir des première et seconde émissions reçues soumises à conversion abaisseuse.

7. Procédé selon l'une quelconque des revendications 1 à 6, dans lequel : la génération de la forme d'onde comprimée spécifiée inclut l'utilisation d'un premier canal d'un générateur de forme d'onde arbitraire (AWG) ;
dans lequel : la génération de la fréquence de LO soumise à conversion abaisseuse spécifiée inclut l'utilisation d'un second canal de l'AWG ; et dans lequel :
la conversion abaisseuse du signal d'émission inclut l'utilisation d'un mélangeur de sous-harmoniques qui comprend un premier port qui est configuré de manière à ce qu'il reçoive le signal qui est basé sur la fréquence de LO soumise à conversion abaisseuse spécifiée, un deuxième port qui est configuré de manière à ce qu'il reçoive l'émission et un troisième port qui est configuré de manière à ce qu'il fournisse le signal d'émission soumis à conversion abaisseuse à l'intérieur de la bande passante de l'ADC (120).

8. Procédé selon l'une quelconque des revendications 1 à 6, comprenant la conversion élévatrice de la fréquence de LO soumise à conversion abaisseuse spécifiée et la multiplication en termes de fréquence de la sortie soumise à conversion élévatrice de manière à fournir le signal qui est basé sur la fréquence de LO soumise à conversion abaisseuse ; dans lequel :
la conversion abaisseuse de l'émission inclut l'utilisation d'un mélangeur de mode fondamental qui comprend un unique port d'entrée qui est configuré de manière à ce qu'il reçoive le signal qui est basé sur la fréquence de LO soumise à conversion abaisseuse et l'émission, et un second port qui est configuré de manière à ce qu'il fournisse le signal d'émission soumis à conversion abaisseuse ; et dans lequel :
le signal qui est basé sur la fréquence de LO se propage via la même trajectoire spatiale que le signal d'excitation comprimé et l'émission déclenchée.

9. Procédé selon l'une quelconque des revendications 1 à 8, dans lequel la référence de fréquence (104) comprend un oscillateur de précision qui est configuré de manière à ce qu'il fournisse une fréquence de référence sur la base au moins en partie d'une transition de niveau d'énergie atomique ou moléculaire.

10. Système pour la mesure de spectres de rotation de molécules dans un échantillon de gaz (116) en réponse à une excitation en utilisant une plage spécifiée de fréquences d'excitation qui sont sélectionnées à l'intérieur de la plage qui va des hyperfréquences aux TeraHertz, comprenant :
un convertisseur numérique - analogique (DAC) (102) qui est couplé à une référence de fréquence (104) et qui est configuré de manière à ce qu'il fournisse une forme d'onde comprimée spécifiée et une fréquence d'oscillateur local (LO) de conversion abaisseuse spécifiée ;
un oscillateur à verrouillage de phase qui est couplé à la référence de fréquence (104) et qui est configuré de manière à ce qu'il fournisse une fréquence de LO de conversion élévatrice spécifiée ;
un premier mélangeur (122A) qui est configuré de manière à ce qu'il reçoive la forme d'onde comprimée spécifiée en provenance du DAC (102) et la fréquence de LO de conversion élévatrice spécifiée en provenance de l'oscillateur à verrouillage de phase, et qui est configuré de manière à ce qu'il fournisse une forme d'onde comprimée soumise à conversion élévatrice ;
un multiplicateur de fréquence qui est configuré de manière à ce qu'il reçoive la forme d'onde comprimée soumise à conversion élévatrice et qui est configuré de manière à ce qu'il fournisse un signal d'excitation comprimé pour exciter l'échantillon de gaz (116) ;
un deuxième mélangeur (118) qui est configuré de manière à ce qu'il reçoive une émission qui est indicative d'une décroissance d'induction libre (FID) en provenance de l'échantillon de gaz (116), l'émission étant déclenchée au moins en partie par le signal d'excitation comprimé, le deuxième mélangeur (118) étant configuré de manière à ce qu'il reçoive la fréquence de LO de conversion abaisseuse spécifiée en provenance du DAC (102) et étant configuré de manière à ce qu'il fournisse un signal de sortie à l'intérieur de la bande passante d'un convertisseur analogique - numérique ; et
un convertisseur analogique - numérique (ADC) (120) qui est couplé au deuxième mélangeur (118) ; dans lequel :
le DAC (102) est configuré de manière à ce qu'il génère une première forme d'onde comprimée spécifiée pendant une première durée et une seconde forme d'onde comprimée pendant une seconde durée, les première et seconde formes d'onde comprimées incluant des plages de fréquences différentes respectives, les plages de fréquences différentes présentant des bandes passantes respectives dont chacune est spécifiée de manière à ce qu'elle soit à l'intérieur de la bande passante de l'ADC (120) et aboutissant à des émissions reçues qui incluent une bande passante totale qui correspond à la plage spécifiée de fréquences d'excitation lorsque les émissions reçues sont reçues de façon séquentielle et sont agrégées de manière à ce qu'elles englobent une bande passante plus large que la bande passante de l'ADC (120).

11. Système selon la revendication 10, comprenant :
un processeur qui est couplé à l'ADC (120), le processeur étant configuré de manière à ce qu'il estime un premier spectre qui correspond à la plage spécifiée de fréquences d'excitation, incluant l'utilisation d'une information qui correspond à des émissions respectives qui sont obtenues pendant au moins une partie des première et seconde durées.

12. Système selon la revendication 11, dans lequel : le DAC (102) est configuré de manière à ce qu'il génère une fréquence fixe spécifiée de manière à exciter l'échantillon de gaz (116) après la génération du signal d'excitation comprimé ; et dans lequel :
le processeur est configuré de manière à ce qu'il estime un second spectre en utilisant une information qui correspond à une émission qui est obtenue à partir de l'échantillon de gaz (116) en réponse au signal d'excitation comprimé et en réponse à la fréquence fixe spécifiée.

13. Système selon l'une quelconque des revendications 10 à 12, comprenant un générateur de forme d'onde arbitraire (AWG) qui inclut le DAC (102), l'AWG étant configuré de manière à ce qu'il génère la forme d'onde comprimée spécifiée en utilisant un premier canal de l'AWG et étant configuré de manière à ce qu'il génère la fréquence de LO de conversion abaisseuse spécifiée en utilisant un second canal de l'AWG ; et dans lequel :
le deuxième mélangeur (118) comprend un mélangeur de sous-harmoniques qui inclut un premier port qui est configuré de manière à ce qu'il reçoive le signal qui est basé sur la fréquence de LO de conversion abaisseuse spécifiée, un second port qui est configuré de manière à ce qu'il reçoive l'émission et un troisième port qui est configuré de manière à ce qu'il fournisse le signal d'émission soumis à conversion abaisseuse à l'intérieur de la bande passante de l'ADC (120).

14. Système selon l'une quelconque des revendications 10 à 13, comprenant : un troisième mélangeur qui est configuré de manière à ce qu'il convertisse par élévation la fréquence de LO de conversion abaisseuse spécifiée de manière à ce qu'il fournisse une sortie soumise à conversion élévatrice ; et
un second multiplicateur de fréquence qui est configuré de manière à ce qu'il multiplie en termes de fréquence la sortie soumise à conversion élévatrice de manière à ce qu'il fournisse le signal qui est basé sur la fréquence de LO de conversion abaisseuse ; dans lequel :
le deuxième mélangeur (118) comprend un mélangeur de mode fondamental qui inclut un unique port d'entrée qui est configuré de manière à ce qu'il reçoive le signal qui est basé sur la fréquence de LO de conversion abaisseuse et l'émission, et un second port qui est configuré de manière à ce qu'il fournisse le signal d'émission soumis à conversion abaisseuse ; et dans lequel :
le signal qui est basé sur la fréquence de LO se propage via la même trajectoire spatiale que le signal d'excitation comprimé et l'émission déclenchée.

15. Système selon l'une quelconque des revendications 10 à 14, comprenant le fait que la référence de fréquence (104) inclut un oscillateur de précision qui est configuré de manière à ce qu'il fournisse une fréquence de référence qui est dérivée au moins en partie à partir d'une transition de niveau d'énergie atomique ou moléculaire.
